# EUROPÄISCHE PATENTSCHRIFT

(11) **EP 1 798 617 B1**
(45) Veröffentlichungstag und Bekanntmachung des Hinweises auf die Patenterteilung: **21.11.2012**
(21) Anmeldenummer: 06024485.2
(22) Anmeldetag: 25.11.2006
(51) Int. Cl.: G05B 19/414, G05B 19/042, G05B 19/05

(54) **Verfahren zur Inbetriebnahme von numerischen Steuerungen für Werkzeug- oder Produktionsmaschinen**
Start-up method for numerical controllers of machine tools or production machines
Procédé de mise en exploitation de commandes numériques pour machine-outils ou machines de fabrication

(30) Priorität: 17.12.2005 DE 102005060601
(43) Veröffentlichungstag der Anmeldung: 20.06.2007
(73) Patentinhaber: Dr. Johannes Heidenhain GmbH, 83301 Traunreut (DE)
(72) Erfinder: Kerner, Norbert, 83374 Traunwalchen (DE); Zehentner, Georg, 83317 Teisendorf (DE)
(74) Vertreter: Pleyer, Hans Anno

(56) Entgegenhaltungen:
- DE-A1- 10 318 451
- US-A- 5 481 750
- US-A1- 2004 179 482
- US-B1- 6 574 234

## Beschreibung

Die Erfindung betrifft ein Verfahren zur Inbetriebnahme von numerischen Steuerungen für Werkzeug- oder Produktionsmaschinen nach dem Oberbegriff von Anspruch 1.

Für die Steuerung von Werkzeug- oder Produktionsmaschinen werden heutzutage vorwiegend numerische Steuerungen (numerical control; NC) eingesetzt. Um derartige numerische Steuerungen möglichst flexibel zu gestalten, werden sie oft modular aufgebaut. Dabei werden an einen Hauptrechner verschiedene Folgegeräte, wie beispielsweise Reglereinheiten, Umrichtermodule oder auch programmierbare Steuerungen (programmable logic control; PLC) angeschlossen.

Der Hauptrechner stellt die zur Bedienung der NC notwendigen Benutzerschnittstellen wie Tastatur und Monitor zur Verfügung und dient zur Erstellung, Speicherung und Abarbeitung von Programmen. In den Reglereinheiten befinden sich beispielsweise Regelkreise, die zur Ansteuerung von Umrichtermodulen dienen, die wiederum Motoren ansteuern. Außerdem umfassen die Reglereinheiten digitale und/oder analoge Schnittstellen zur Erfassung von Istwerten, die während eines Programmlaufs kontinuierlich zur Steuerung der Regelkreise benötigt werden. Bei den zu erfassenden Istwerten kann es sich beispielsweise um Positionswerte (Lagewerte), Geschwindigkeitswerte, Beschleunigungswerte oder auch Stromwerte handeln. PLC dienen zum Auslösen von Schaltvorgängen in Abhängigkeit von Schaltzuständen, z.B. von Endschaltern. Ebenso wie der Hauptrechner sind auch die Folgegeräte mikroprozessorgesteuert. Zur Übertragung von Daten sind Hauptrechner und Folgegeräte über ein Datenübertragungsnetzwerk verbunden.

Der modulare Aufbau hat den Vorteil, dass, je nachdem wie viele und welche Folgegeräte an einen Hauptrechner einer numerischen Steuerung angeschlossen werden, die verschiedensten Anforderungen erfüllt werden können. So ist es beispielsweise möglich, mit dem gleichen Hauptrechner durch Variation der Folgegeräte verschiedene Werkzeugmaschinen (3-achsige- und 5-achsige Fräsmaschinen), Produktionsanlagen mit verschiedener Anzahl von Antriebssystemen oder auch Fertigungsroboter mit unterschiedlicher Zahl von servo-gesteuerten Gelenken zu steuern. Darüber hinaus sind modulare numerische Steuerungen einfach nachträglich erweiterbar.

Damit der Hauptrechner die Folgegeräte unabhängig voneinander ansprechen kann, wird ihnen eine individuelle Hardware-Adresse zugeordnet. Um darüber hinaus zu wissen, welches Folgegerät welche Funktion hat, muss im Hauptrechner jede Hardware-Adresse einer logischen Adresse zugeordnet werden. Nur dann ist es dem Hauptrechner möglich, beispielsweise zu bestimmen, welche Reglereinheit, bzw. welcher Umrichter zum Verfahren einer bestimmten Vorschubachse einer zu steuernden Werkzeugmaschine adressiert werden muss.

Die Zuordnung von logischer Adresse zu Hardwareadresse musste bisher manuell erfolgen, etwa durch manuelle Eingabe der Hardwareadressen in den Hauptrechner durch einen Techniker bei der Inbetriebnahme der Werkzeug- oder Produktionsmaschine. Eine weitere Möglichkeit ist es, den Folgegeräten ihre logische Adresse direkt einzugeben. Das kann beispielsweise durch Einstellen eines Kodierschalters oder durch Eintrag eines speziellen Kodeworts in einen Speicher im Folgegerät, der wiederum über die Datenschnittstelle des Folgegeräts auslesbar ist, erfolgen. Beide Verfahren sind jedoch gerade bei umfangreichen Maschinen mit einer großen Anzahl von Folgegeräten recht aufwändig und fehlerträchtig.

Es ist daher Aufgabe der Erfindung, ein Verfahren anzugeben, mit dem die Inbetriebnahme von numerischen Steuerungen von Werkzeug- oder Produktionsmaschinen vereinfacht wird.

Diese Aufgabe wird gelöst durch ein Verfahren nach Anspruch 1. Vorteilhafte Details des Verfahrens ergeben sich aus den von Anspruch 1 abhängigen Ansprüchen.

Es wird nun ein Verfahren zur Inbetriebnahme einer numerischen Steuerung für Werkzeug- oder Produktionsmaschinen vorgeschlagen, wobei die numerische Steuerung aus einem Hauptrechner und wenigstens einem Folgegerät besteht, die über ein Datenübertragungsnetzwerk miteinander verbunden sind. Das wenigstens eine Folgegerät ist vom Hauptrechner über eine logische Adresse adressierbar, der eine Hardware-Adresse mit Informationen über die physikalische Adressierung des wenigstens einen Folgegeräts über das Datenübertragungsnetzwerk zugeordnet ist. Der Hauptrechner fordert in einer Einrichtbetriebsart sequentiell für Folgegeräte, deren logischer Adresse keine Hardware-Adresse zugeordnet ist, von einem Bediener eine Zuordnungsinformation zwischen logischer Adresse und Hardware-Adresse an und speichert diese nach erfolgter Zuordnung auf einer Speichereinheit ab.

In einer ersten bevorzugten Ausführungsform fordert der Hauptrechner die Zuordnungsinformation dadurch an, dass er auf einem Bildschirm die logische Adresse des zuzuordnenden Folgegerätes ausgibt. Ein Bediener initiiert daraufhin durch Betätigen eines Bedienelements am zuzuordnenden Folgegerät die Übertragung der Hardwareadresse zum Hauptrechner.

In einer zweiten bevorzugten Ausführungsform erfolgt die Anforderung der Zuordnungsinformation dadurch, dass der Hauptrechner unter Verwendung der Hardware-Adresse eine Signaleinheit am zuzuordnenden Folgegerät einschaltet und am Bildschirm eine Liste logischer Adressen anzeigt. Ein Bediener wählt daraufhin über ein Eingabegerät die zum Folgegerät mit eingeschalteter Signaleinheit gehörende logische Adresse aus der angezeigten Liste aus.

In einer dritten bevorzugten Ausführungsform erfolgt die Anforderung der Zuordnungsinformation dadurch, dass der Hauptrechner ein zuzuordnendes Folgegerät, sowie eine Liste von Hardware-Adressen auf dem Bildschirm anzeigt. Die Zuordnung erfolgt dadurch, dass der Bediener über ein Eingabegerät sequentiell Hardware-Adressen aus der Liste auswählt und der Hauptrechner unter Verwendung der Hardware-Adresse eine Signaleinheit am ausgewählten Folgegerät einschaltet. Erkennt der Bediener anhand der eingeschalteten Signaleinheit, dass die aktuell ausgewählte Hardware-Adresse der zuzuordnenden Folgeadresse entspricht, bestätigt er dem Hauptrechner über das Eingabegerät die erfolgte Zuordnung.

Besonders vorteilhaft ist es, wenn der Hauptrechner bei jedem Einschalten der numerischen Steuerung überprüft, ob jeder logischen Adresse eine Hardware-Adresse zugeordnet ist und bei fehlender Zuordnungsinformation in die Einrichtbetriebsart schaltet.

Dabei ist es zweckmäßig, wenn die Zuordnungsinformation in Form einer Parameterdatei abgespeichert wird. Besonders geeignet zur Abspeicherung der Parameterdatei sind nichtflüchtige Speicher.

Weitere Vorteile sowie Einzelheiten der vorliegenden Erfindung ergeben sich aus der nachfolgenden Beschreibung eines bevorzugten Verfahrens zur Inbetriebnahme einer numerischen Steuerung für Werkzeug- oder Produktionsmaschinen anhand der Figuren. Dabei zeigt
- Figur 1: ein Blockdiagramm einer erfindungsgemäßen numerischen Steuerung,
- Figur 2: ein Ablaufdiagramm eines ersten erfindungsgemäßen Verfahrens,
- Figur 3: ein erstes Beispiel für eine Parameterdatei
- Figur 4: ein Ablaufdiagramm eines zweiten erfindungsgemäßen Verfahrens,
- Figur 5: ein Ablaufdiagramm eines dritten erfindungsgemäßen Verfahrens,
- Figur 6: ein Blockdiagramm einer weiteren erfindungsgemäßen numerischen Steuerung und
- Figur 7: ein zweites Beispiel für eine Parameterdatei.

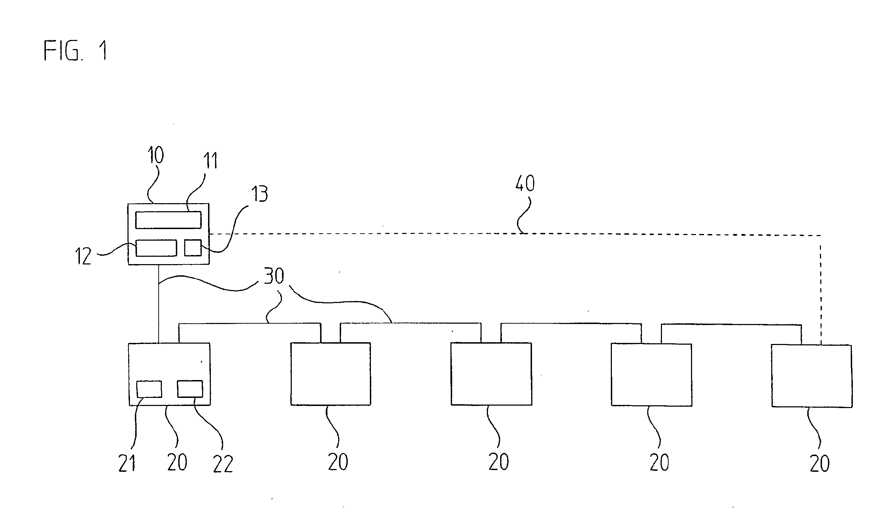

Figur 1 zeigt ein Blockdiagramm einer erfindungsgemäßen numerischen Steuerung. Sie besteht aus einem Hauptrechner 10 und einer Anzahl von Folgegeräten 20, die über ein Datenübertragungsnetzwerk 30 in Form einer Reihenschaltung miteinander verbunden sind. Typische Folgegeräte 20 in numerischen Steuerungen sind beispielsweise Reglereinheiten, Umrichtermodule oder auch programmierbare Steuerungen (programmable logic control; PLC).

Für das Datenübertragungsnetzwerk 30 können beliebige Schnittstellenarchitekturen verwendet werden, die einen bidirektionalen Datenaustausch zwischen dem Hauptrechner 10 und den Folgegeräten 20 erlauben. Da der Hauptrechner 10 und die Folgegeräte 20 jedoch häufig räumlich voneinander getrennt angeordnet werden, sind serielle Schnittstellen wegen der geringen Anzahl von Leitungen, die für die Datenübertragung benötigt werden, für den Aufbau des Datenübertragungsnetzwerks 30 besonders geeignet. Im dargestellten Beispiel besteht das Datenübertragungsnetzwerk 30 aus seriellen Punkt-zu-Punkt-Verbindungen. Eine geeignete und weit verbreitete serielle Datenschnittstelle, die zur Bildung des Datenübertragungsnetzwerks 30 besonders vorteilhaft einsetzbar ist, ist vor allem aus dem Bereich der Local Area Networks (LAN) bekannt und trägt die Bezeichnung FAST ETHERNET (Norm IEEE Std. 802.3-2002).

Der Austausch von Daten in einem Datenübertragungsnetzwerk, wie es in Figur 1 dargestellt ist, kann beispielsweise so erfolgen, dass der Hauptrechner 10 serielle Datenpakete aussendet, die die Folgegeräte 20 entlang der Reihenschaltung empfangen, auswerten und zum jeweils nächsten Folgegerät 20 weiterschicken. Durch in den Datenpaketen enthaltene Adressierungsinformationen können gezielt Folgegeräte 20 ausgewählt werden.

Wenn ein Datenpaket das letzte Folgegerät 20 der Reihenschaltung erreicht, gibt es prinzipiell zwei Möglichkeiten, um das Datenpaket zum Hauptrechner 10 zurückzuschicken. Die erste Möglichkeit besteht darin, dass das letzte Folgegerät 20 das Datenpaket entlang der Reihenschaltung in Richtung des Hauptrechners zurückschickt. Auf diese Weise passieren alle Datenpakete alle Folgegeräte 20 zweimal. Das kann beispielsweise dazu genutzt werden, dass in einer Richtung von den adressierten Folgegeräten 20 Daten aus den Datenpaketen entnommen werden (Schreibzugriff vom Hauptrechner 10 auf die Folgegeräte 20) und in der anderen Richtung Daten von den adressierten Folgegeräten 20 in das Datenpaket eingetragen werden (Lesezugriff vom Hauptrechner 10 auf die Folgegeräte 20). Die zweite Möglichkeit, Datenpakete zum Hauptrechner 10 zurückzuschicken, besteht darin, dass das letzte Folgegerät 20 der Reihenschaltung über eine weitere Datenübertragungsleitung 40 wiederum mit dem Hauptrechner 10 verbunden ist. Dadurch ist eine Ringstruktur gebildet, über die Datenpakete vom letzen Folgegerät 20 der Reihenschaltung direkt zurück zum Hauptrechner 10 geleitet werden. Diese Möglichkeit ist in Figur 1 durch eine gestrichelte Linie angedeutet.

Der Hauptrechner 10 umfasst einen Bildschirm 11, ein Eingabegerät 12 und eine Speichereinheit 13. Das Eingabegerät 11 kann beispielsweise eine Tastatur, eine Maus, ein Touchpad, etc. sein. Die Speichereinheit 13 kommt mit Vorteil ein nichtflüchtiger Speicher zum Einsatz. Selbstverständlich kann, wie der Fachmann weiß, der Hauptrechner 10 noch weitere Komponenten enthalten. Diese sind jedoch für die vorliegende Erfindung nicht relevant und werden daher nicht beschrieben.

Die Folgegeräte 20 enthalten weiter je eine Signaleinheit 21 und ein Bedienelement 22. Die Signaleinheit 21 ist vorzugsweise als Leuchtmittel zur optischen Signalisierung von Ereignissen ausgeführt, als Bedienelement 22 kann ein Taster zum Einsatz kommen. Mit Vorteil ist die Signaleinheit 21 so konfiguriert, dass sie vom Hauptrechner 10 über das Datenübertragungsnetzwerk 30 ein- bzw. wieder ausgeschaltet werden kann.
Um eine numerische Steuerung möglichst flexibel aufbauen zu können und insbesondere die Programme, die im Hauptrechner 10 abgearbeitet werden, weitgehend unabhängig von der physikalischen Ausführung der Folgegeräte 20 gestalten zu können, werden die Folgegeräte 20 vom Hauptrechner 10 vorzugsweise über eine logische Adresse LA adressiert. Der logischen Adresse LA ist wiederum eine Hardware-Adresse HA zugeordnet, die Informationen darüber enthält, wie das Folgegerät 20 über das Datenübertragungsnetzwerk 30 physikalisch adressiert werden kann. Mit Vorteil ist die Zuordnungsinformation zwischen logischer Adresse LA und Hardware-Adresse HA in der Speichereinheit 13 in Form einer Parameterdatei PM abgespeichert.

Insbesondere bei der Erstinbetriebnahme einer Werkzeug- oder Produktionsmaschine ist die Zuordnung zwischen logischer Adresse LA und Hardware-Adresse HA noch unbekannt. Der Hauptrechner 10 kann lediglich über das Datenübertragungsnetzwerk 30 die vorhandene Anzahl von Folgegeräten 20 ermitteln und ihre Hardware-Adressen HA abfragen. Somit ist dem Hauptrechner 10 zwar die Topologie des Datenübertragungsnetzwerks 30 bekannt und jedes Folgegerät 20 individuell ansprechbar, die Abarbeitung von Programmen zur Steuerung der Werkzeug- oder Produktionsmaschine ist aufgrund der fehlenden Zuordnung zwischen logischer Adresse LA und Hardware-Adresse HA aber nicht möglich.

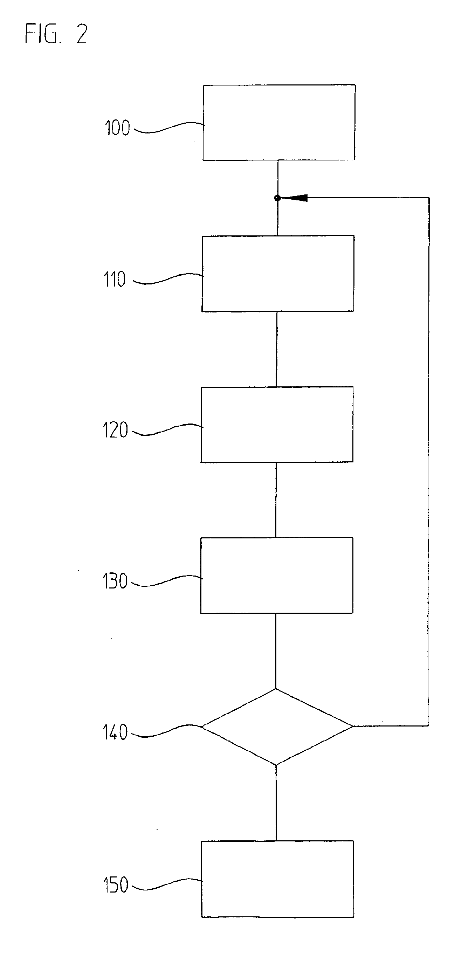

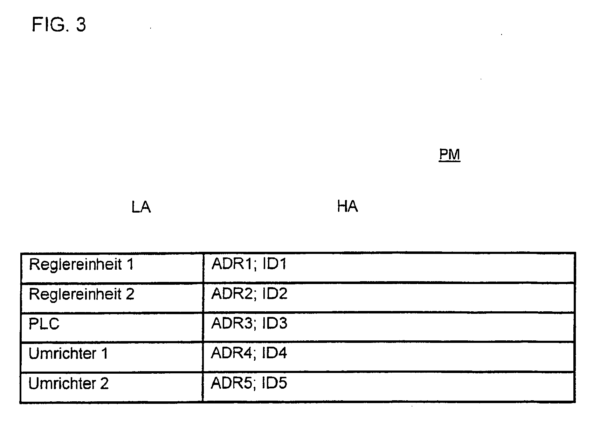

Anhand der Figuren 2 und 3 soll nun ein erstes Verfahren beschrieben werden, das eine Zuordnung der logischen Adresse LA der Folgegeräte 20 zur dazugehörigen Hardware-Adresse HA erlaubt. Dabei zeigt Figur 2 ein Ablaufdiagramm dieses Verfahrens und Figur 3 ein Beispiel für eine Parameterdatei PM.

Zu Beginn des in Figur 2 beschriebenen Verfahrens wird in einem Schritt 100 in eine Einrichtbetriebsart geschaltet. Diese Umschaltung kann beispielsweise automatisch erfolgen, wenn der Hauptrechner 10 nach dem Einschalten der Werkzeug- oder Produktionsmaschine bei der Initialisierung der einzelnen Komponenten anhand der Parameterdatei PM feststellt, dass nicht jeder benötigten logischen Adresse LA eine Hardware-Adresse HA zugeordnet ist, bzw. dass Hardware-Adressen HA vorhanden sind, denen keine logische Adresse LA zugeordnet ist. Selbstverständlich kann aber auch eine manuelle Umschaltung über das Eingabegerät 12 und den Bildschirm 11 des Hauptrechners 10 vorgesehen sein.

In Schritt 110 wählt der Hauptrechner 10 eine logische Adresse LA, der noch keine Hardware-Adresse HA, also kein Folgegerät 20 zugeordnet ist, aus der Parameterdatei PM aus und fordert von einem Bediener eine Zuordnungsinformation an, beispielsweise durch Ausgabe der logischen Adresse LA auf dem Bildschirm 11.

Der Bediener identifiziert in Schritt 120 anhand der logischen Adresse LA das dazugehörige Folgegerät 20 und betätigt dessen Bedienelement 22. Das Bedienelement 22 kann in diesem Ausführungsbeispiel etwa so konfiguriert sein, dass das Folgegerät 20 bei seiner Betätigung, etwa durch einen Bediener, seine Hardware-Adresse HA über das Datenübertragungsnetzwerk 30 zum Hauptrechner 10 schickt. Eine weitere Möglichkeit wäre es, dass das Folgegerät 20 die Betätigung des Bedienelements 22 speichert und die Hardware-Adresse HA erst auf Anforderung des Hauptrechners 10 überträgt.

Der Hauptrechner 10 kann nun im Schritt 130 die erhaltene Hardware-Adresse HA der logischen Adresse LA zuordnen und beispielsweise in die Parameterdatei PM eintragen. Da sich der Bediener zu diesem Zeitpunkt am Folgegerät 20 befindet, ist es sinnvoll, wenn der Hauptrechner 10 die Signaleinheit 21 des aktuellen Folgegeräts 20 einschaltet, um die erfolgreiche Zuordnung zu signalisieren.

Anschließend prüft der Hauptrechner 10 im Schritt 140, ob es noch weitere logische Adressen LA gibt, denen noch keine Hardware-Adresse zugeordnet ist. Ist das der Fall, wird das Verfahren bei Schritt 110 fortgeführt.

Nachdem schließlich allen logischen Adressen LA, die in der Parameterdatei PM enthalten sind, eine Hardware-Adresse HA zugeordnet wurde, speichert der Hauptrechner 10 in Schritt 150 die nun vollständig ausgefüllte Parameterdatei PM auf der Speichereinheit 13, beispielsweise eine Festplatte, ein EEPROM oder ein anderer nichtflüchtiger Speicher, ab und verlässt die Einrichtbetriebsart.

Figur 3 zeigt beispielhaft eine Parameterdatei PM. Sie ist in Form einer Tabelle aufgebaut und enthält in der linken Spalte eine Liste logischer Adressen LA, denen in der rechten Spalte Hardware-Adressen HA zugeordnet sind. Die tatsächliche Realisierung der Parameterdatei PM ist selbstverständlich beliebig.

Die Hardware-Adresse HA besteht, wie aus Figur 3 ersichtlich, aus zwei Komponenten, einer Busadresse ADR und einem Identifikationsbezeichner ID. Die Busadresse ADR enthält dabei die Position des Folgegeräts 20 im Datenübertragungsnetzwerk 30, im einfachsten Fall eine laufende Nummer der Folgegeräte 20 in der Reihenschaltung, und ist daher ausreichend, um das Folgegerät 20 eindeutig adressieren zu können. Besonders vorteilhaft ist es jedoch, wenn die Hardware-Adresse HA zusätzlich den Identifikationsbezeichner ID enthält, über den das Folgegerät 20 unverwechselbar, beispielsweise durch eine Seriennummer, ggf. in Verbindung mit einer Gerätebezeichnung, gekennzeichnet ist.

Dazu ein Beispiel: muss ein Folgegerät 20 wegen eines Defekts ausgetauscht werden, befindet sich das neue Folgegerät 20 an der selben Stelle im Datenübertragungsnetzwerk 30. Es kann also weiterhin über die Busadresse ADR adressiert werden, der Hauptrechner 10 kann den Austausch des Folgegeräts 20 nicht bemerken. Häufig müssen Folgegeräte 20 jedoch vor der ersten Verwendung in einer Werkzeug- oder Produktionsmaschine initialisiert werden, etwa durch Übertragung von Kalibrierdaten. Auch ist es möglich, dass es sich bei dem neuen Folgegerät 20 zwar um den gleichen Typ, aber um eine abweichende Geräteversion handelt. In beiden Fällen ist ein Eingriff durch einen Bediener notwendig. Enthält die Hardware-Adresse einen Identifikationsbezeichner ID, so kann der Hauptrechner 10 den Austausch eines Folgegeräts 20 durch Vergleich mit dem in der Parameterdatei PM enthaltenen ldentifikationsbezeichner ID feststellen und durch Ausgabe einer Warnmeldung auf dem Bildschirm 11 oder durch automatisches Aktivieren der Einrichtbetriebsart die erforderlichen Schritte vom Bediener erzwingen.

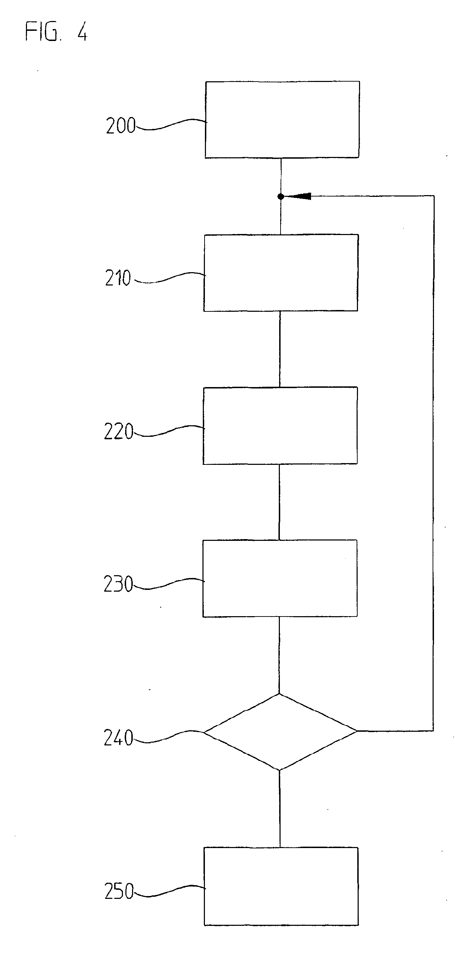

In Figur 4 ist ein weiteres Beispiel für ein erfindungsgemäßes Verfahren zur Inbetriebnahme einer numerischen Steuerung für Werkzeug- und Produktionsmaschinen dargestellt.

Zu Beginn des Verfahrens wird in einem Schritt 200 ebenfalls, automatisch oder manuell, in eine Einrichtbetriebsart geschaltet.

In Schritt 210 wählt der Hauptrechner 10 eine Hardware-Adresse HA aus, der noch keine logische Adresse LA zugeordnet ist, und fordert von einem Bediener eine Zuordnungsinformation an, indem er die Signaleinheit 21 des zur Hardware-Adresse HA gehörenden Folgegeräts 20 aktiviert und auf dem Bildschirm 11 eine Liste von logischen Adressen LA ausgibt, denen noch keine Hardware-Adresse HA zugeordnet ist.

Der Bediener identifiziert in Schritt 220 anhand der aktivierten Signaleinheit 21 das ausgewählte Folgegerät 20 und wählt über das Eingabegerät 12 aus der auf dem Bildschirm 11 angezeigten Liste die dazugehörige logische Adresse LA. Die Auswahl kann auf verschiedenste Arten geschehen, wie z.B. über die Cursortasten einer Tastatur oder mittels einer Maus.

Der Hauptrechner 10 kann nun im Schritt 230 die Zuordnung der Hardware-Adresse HA zur logischen Adresse LA in die Parameterdatei PM eintragen und die Signaleinheit 21 des aktuellen Folgegeräts 20 wieder ausschalten.

Anschließend prüft der Hauptrechner 10 im Schritt 240, ob es noch weitere Hardware-Adressen HA gibt, denen noch keine logische Adresse LA zugeordnet ist. Ist das der Fall, wird das Verfahren bei Schritt 210 fortgeführt.

Nachdem schließlich allen Hardware-Adressen HA logische Adressen LA zugeordnet wurden, speichert der Hauptrechner 10 in Schritt 250 die nun vollständig ausgefüllte Parameterdatei PM auf der Speichereinheit 13 ab und verlässt die Einrichtbetriebsart.

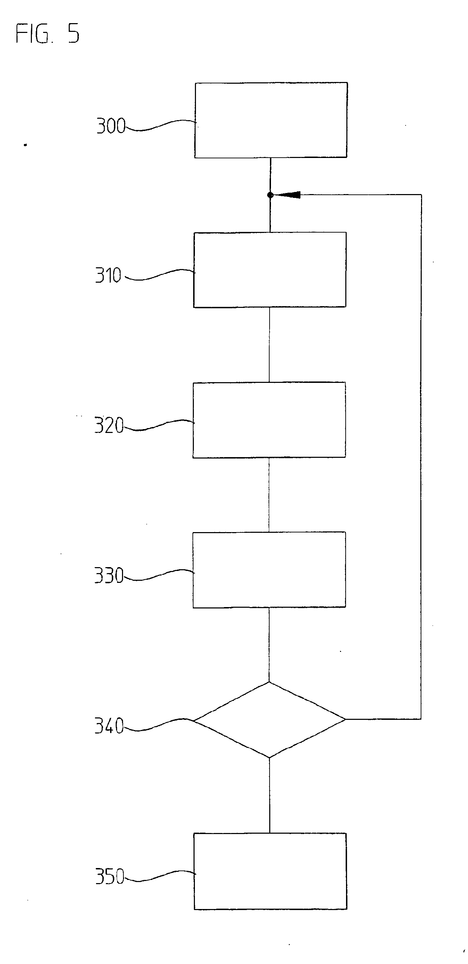

Figur 5 zeigt ein weiteres Beispiel für ein erfindungsgemäßes Verfahren zur Inbetriebnahme einer numerischen Steuerung für Werkzeug- und Produktionsmaschinen.

Zu Beginn des Verfahrens wird in einem Schritt 300 wiederum in eine Einrichtbetriebsart geschaltet.

In Schritt 310 wählt der Hauptrechner 10 eine logische Adresse LA aus, der noch keine Hardware-Adresse HA zugeordnet ist, und fordert von einem Bediener eine Zuordnungsinformation an, indem er die logische Adresse LA eines zuzuordnenden Folgegeräts 20, sowie eine Liste von Hardware-Adressen HA, denen noch keine logische Adresse LA zugeordnet ist, auf dem Bildschirm 11 ausgibt.

Der Bediener wählt daraufhin in Schritt 320 mit dem Eingabegerät 12, beispielsweise einer Tastatur, sequentiell Hardware-Adressen HA aus der Liste aus, wobei der Hauptrechner 10 die Signaleinheit 21 des aktuellen, über die ausgewählte Hardware-Adresse HA bestimmten Folgegeräts 20 einschaltet. Erkennt der Bediener anhand der eingeschalteten Signaleinheit 21, dass das aktuell ausgewählte Folgegerät 20 zur gesuchten logischen Adresse LA gehört, bestätigt er dem Hauptrechner 10 die erfolgreiche Zuordnung über das Eingabegerät 12.

Der Hauptrechner 10 kann nun im Schritt 330 die Zuordnung der Hardware-Adresse HA zur logischen Adresse LA in die Parameterdatei PM eintragen.

Anschließend prüft der Hauptrechner 10 im Schritt 340, ob es noch weitere logische Adressen LA gibt, denen noch keine Hardware-Adresse HA zugeordnet ist. Ist das der Fall, wird das Verfahren bei Schritt 310 fortgeführt.

Nachdem schließlich allen logische Adressen LA Hardware-Adressen HA zugeordnet wurden, speichert der Hauptrechner 10 in Schritt 350 die nun vollständig ausgefüllte Parameterdatei PM auf der Speichereinheit 13 ab und verlässt die Einrichtbetriebsart.

Besonders vorteilhaft am zweiten und dritten beschriebenen Verfahren ist es, dass auf der Seite der Folgegeräte 20 keine Bedienelemente 22 benötigt werden. Zum einen können dadurch die Kosten der Folgegeräte 20 reduziert werden, zum anderen ist dieses Verfahren auch zur einfachen Nachrüstung an bereits bestehenden numerischen Steuerungen für Werkzeug- oder Produktionsmaschinen geeignet, deren Folgegeräte 20 nicht mit Bedienelementen 22 ausgestattet sind.

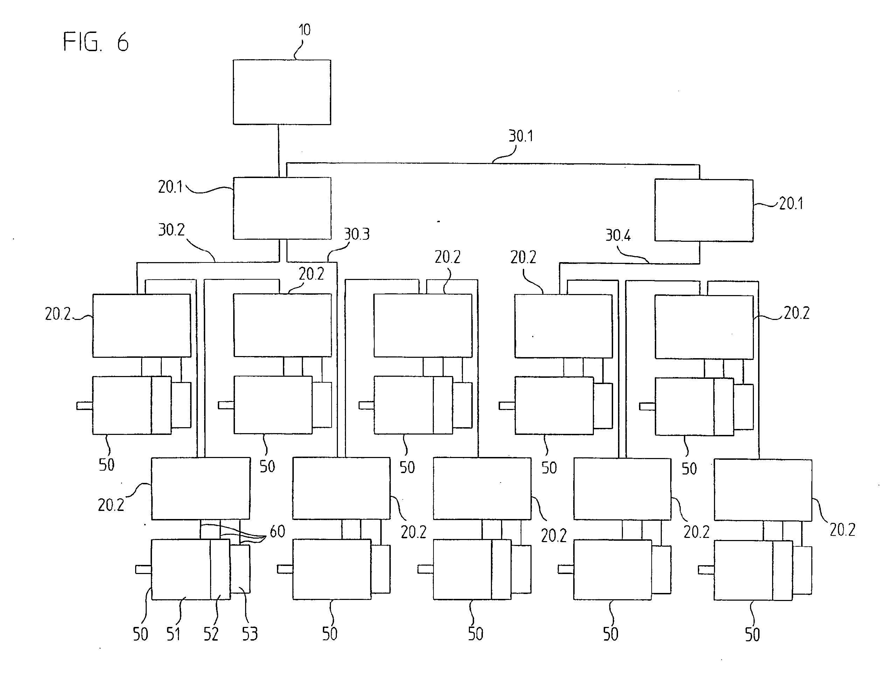

Figur 6 zeigt ein weiteres Beispiel einer numerischen Steuerung für Werkzeug- und Produktionsmaschinen. Dabei sind die Folgegeräte 20 in zwei Hierarchieebenen angeordnet. Die Folgegeräte der ersten Hierarchieebene 20.1 sind über einen ersten Netzwerkstrang 30.1 mit dem Hauptrechner 10 verbunden. Die Folgegeräte der zweiten Hierarchieebene 20.2 über zweite, dritte und vierte Netzwerkstränge 30.2, 30.3, 30.4 an den Folgegeräten der ersten Hierarchieebene 20.1 angeschlossen. Somit besteht das Datenübertragungsnetzwerk 30 in diesem Ausführungsbeispiel aus den Netzwerksträngen 30.1, 30.2, 30.3, 30.4.

Die Folgegeräte der ersten Hierarchieebene 20.1 sind Reglereinheiten 20.1, die Folgegeräte der zweiten Hierarchieebene 20.2 sind Umrichter 20.2. An den Umrichtern 20.2 sind beispielhaft Antriebseinheiten 50, bestehend aus einem Servomotor 51, einer Bremseinheit 52 und einem Drehgeber 53, dargestellt. Diese sind häufig ebenfalls mit digitalen Datenübertragungsschnittstellen 60 ausgestattet, über die gerätespezifische Daten zu den Umrichtern 20.2 und von dort über das Datenübertragungsnetzwerk 30 zum Hauptrechner 10 übertragbar sind. Der Vollständigkeit halber sei erwähnt, dass sich an einem Umrichter 20.2 auch mehrere Antriebseinheiten 50 unterschiedlicher Zusammensetzung befinden können. Ebenfalls können an anderen Folgegeräten 20 beliebige andere Einheiten mit verschiedensten Funktionalitäten angeschlossen sein.

Auch in dieser Netzwerkstruktur sind die in Figur 2, Figur 4 und Figur 5 dargestellten Verfahren durchführbar. Da der Hauptrechner 10 jedoch nicht mehr direkt über einen Netzwerkstrang mit den Folgegeräten 20 in der zweiten Hierarchieebene verbunden ist, kann die Kommunikation beispielsweise in zwei Schritten erfolgen: vom Hauptrechner 10 zu den Folgegeräten der ersten Hierarchieebene 20.1 und von dort in einem zweiten Schritt zu den Folgegeräten der zweiten Hierarchieebene 20.2. Damit der Hauptrechner 10 die Folgegeräte der zweiten Hierarchieebene 20.2 adressieren kann, enthält die Busadresse ADR neben der Position des Folgegerätes 20 innerhalb eines Netzwerkstranges, noch die Information, in welchem der Netzwerkstränge 30.1, 30.2, 30.3, 30.4 sich das entsprechende Folgegerät 20 befindet.

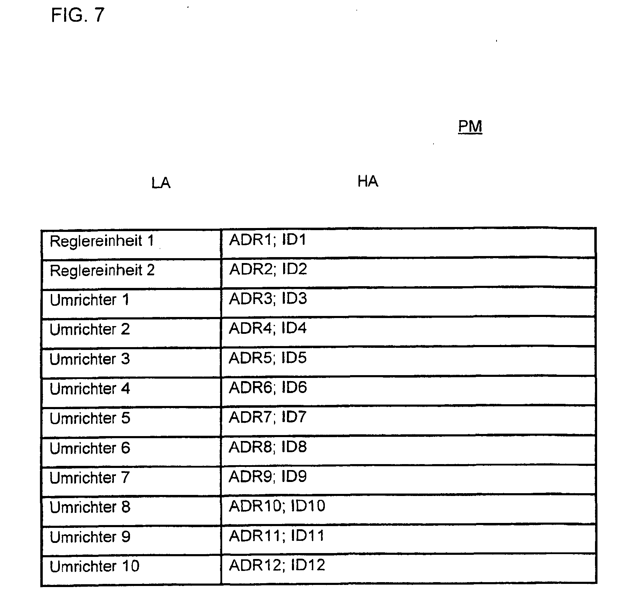

In Figur 7 ist eine Parameterdatei PM zur in Figur 6 gezeigten numerischen Steuerung für Werkzeug- und Produktionsmaschinen dargestellt. Wie in den vorhergehenden Beispielen befinden sich in der linken Spalte die logischen Adressen LA und in der rechten Spalte die Hardware-Adressen HA der Folgegeräte 20. Abweichend enthalten die Busadressen ADR nun Informationen über den Netzwerkstrang 30.1, 30.2, 30.3, 30.4 in dem sich das zu adressierende Folgegerät 20 befindet, sowie eine laufende Nummer, die die Position des Folgegeräts 20 im Netzwerkstrang identifiziert.

Selbstverständlich ist das erfindungsgemäße Verfahren auch in anderen Netzwerktopologien anwendbar. Ebenso kann die Hardware-Adresse HA, je nach Struktur des Datenübertragungsnetzwerks 30, andere, von den beschriebenen Ausführungsbeispielen abweichende Informationen zur physikalischen Adressierung eines Folgegerätes 20 enthalten.

## Patentansprüche

1. Verfahren zur Inbetriebnahme einer numerischen Steuerung für Werkzeug- oder Produktionsmaschinen, wobei die numerische Steuerung aus einem Hauptrechner (10) und wenigstens einem Folgegerät (20) besteht, die über ein Datenübertragungsnetzwerk (30) miteinander verbunden sind und das wenigstens eine Folgegerät (20) vom Hauptrechner (10) über eine logische Adresse (LA) adressierbar ist, der eine Hardware-Adresse (HA) mit Informationen über die physikalische Adressierung des wenigstens einen Folgegeräts (20) über das Datenübertragungsnetzwerk (30) zugeordnet ist, **dadurch gekennzeichnet, dass** der Hauptrechner (10) in einer Einrichtbetriebsart sequentiell für Folgegeräte (20), deren logischer Adresse (LA) keine Hardware-Adresse (HA) zugeordnet ist, von einem Bediener eine Zuordnungsinformation zwischen logischer Adresse (LA) und Hardware-Adresse (HA) anfordert und nach erfolgter Zuordnung auf einer Speichereinheit (13) abspeichert und dass die Anforderung der Zuordnungsinformation dadurch erfolgt, dass der Hauptrechner (10) unter Verwendung der Hardware-Adresse (HA) eine Signaleinheit (21) am zuzuordnenden Folgegerät (20) einschaltet und eine Liste von logischen Adressen auf einem Bildschirm (11) ausgibt, aus der der Bediener am Bildschirm (11) die zum Folgegerät (20) mit eingeschalteter Signaleinheit (21) gehörende logische Adresse (LA) auswählt.

2. Verfahren nach Anspruch 1, **dadurch gekennzeichnet, dass** der Hauptrechner (10) die erfolgte Zuordnung der logischen Adresse (LA) zur Hardwareadresse (HA) durch Aktivieren der Signaleinheit (21) am ausgewählten Folgegerät (20) signalisiert.

3. Verfahren nach einem der vorhergehenden Ansprüche, **dadurch gekennzeichnet, dass** die Hardware-Adresse (HA) eine Busadresse (ADR) umfasst, die die Position des wenigstens einen Folgegeräts (20) im Datenübertragungsnetzwerk (30) angibt.

4. Verfahren nach Anspruch 3, **dadurch gekennzeichnet, dass** die Hardware-Adresse (HA) weiter einen Identifikationsbezeichner (ID) enthält, der das wenigstens eine Folgegerät (20) eindeutig identifiziert.

5. Verfahren nach einem der vorhergehenden Ansprüche, **dadurch gekennzeichnet, dass** der Hauptrechner (10) beim Einschalten der numerischen Steuerung überprüft, ob jeder logischen Adresse (LA) eine Hardware-Adresse (HA) zugeordnet ist und bei einer fehlenden Zuordnungsinformation in die Einrichtbetriebsart schaltet.

6. Verfahren nach einem der vorhergehenden Ansprüche, **dadurch gekennzeichnet, dass** die Zuordnungsinformation in Form einer Parameterdatei (PM) abgespeichert wird.

7. Verfahren nach einem der vorhergehenden Ansprüche, **dadurch gekennzeichnet, dass** die Speichereinheit (13), auf der die Zuordnungsinformation abgespeichert wird, ein nichtflüchtiger Speicher ist.

8. Numerische Steuerung für Werkzeug- oder Produktionsmaschinen, bestehend aus einem Hauptrechner (10) und wenigstens einem Folgegerät (20), die über ein Datenübertragungsnetzwerk (30) miteinander verbunden sind, **dadurch gekennzeichnet, dass** der Hauptrechner (10) und das wenigstens eine Folgegerät (20) zur Durchführung eines Verfahrens nach einem der vorhergehenden Ansprüche eingerichtet sind.

9. Numerische Steuerung nach Anspruch 8, **dadurch gekennzeichnet, dass** das Datenübertragungsnetzwerk (30) aus seriellen Punkt-zu-Punkt-Verbindungen besteht.

## Claims

1. Method for starting up a numerical controller for machine tools or production machines, wherein the numerical controller comprises a main computer (10) and at least one follow-on device (20) which are connected to one another by means of a data transmission network (30), and the at least one follow-on device (20) can be addressed by the main computer (10) by means of a logical address (LA) which has an associated hardware address (HA) with information about the physical addressing of the at least one follow-on device (20) by means of the data transmission network (30), **characterized in that**, in a setup mode of operation, the main computer (10) sequentially requests for follow-on devices (20) for which the logical address (LA) has no associated hardware address (HA) a piece of association information between the logical address (LA) and the hardware address (HA) from a user and stores said piece of association information on a memory unit (13) when the association has been made, and **in that** the piece of association information is requested by virtue of the main computer (10) using the hardware address (HA) to switch on a signalling unit (21) on the follow-on device (20) to be associated and to output a list of logical addresses on a screen (11), from which list the user selects on the screen (11) the logical address (LA) which is associated with the follow-on device (20) with the signalling unit (21) switched on.

2. Method according to Claim 1, **characterized in that** the main computer (10) signals that the logical address (LA) has been associated with the hardware address (HA) by activating the signalling unit (21) on the selected follow-on device (20).

3. Method according to one of the preceding claims, **characterized in that** the hardware address (HA) comprises a bus address (ADR) which indicates the position of the at least one follow-on device (20) in the data transmission network (30).

4. Method according to Claim 3, **characterized in that** the hardware address (HA) also contains an identification descriptor (ID) which explicitly identifies the at least one follow-on device (20).

5. Method according to one of the preceding claims, **characterized in that**, when switching on the numerical controller, the main computer (10) checks whether each logical address (LA) has an associated hardware address (HA), and switches to the setup mode of operation if a piece of association information is missing.

6. Method according to one of the preceding claims, **characterized in that** the piece of association information is stored in the form of a parameter file (PM).

7. Method according to one of the preceding claims, **characterized in that** the memory unit (13) on which the piece of association information is stored is a nonvolatile memory.

8. Numerical controller for machine tools or production machines, comprising a main computer (10) and at least one follow-on device (20) which are connected to one another by means of a data transmission network (30), **characterized in that** the main computer (10) and the at least one follow-on device (20) are set up to carry out a method according to one of the preceding claims.

9. Numerical controller according to Claim 8, **characterized in that** the data transmission network (30) comprises serial point-to-point connections.

## Revendications

1. Procédé de mise en exploitation d'une commande numérique pour machines-outils ou machines de production, dans lequel la commande numérique est constituée d'un ordinateur principal (10) et d'au moins un équipement esclave (20), reliés entre eux par l'intermédiaire d'un réseau de transmission de données (30), et dans lequel l'ordinateur principal (10) peut adresser au moins un équipement esclave (20) par l'intermédiaire d'une adresse logique (LA) à laquelle est attribuée une adresse matérielle (HA) avec des informations concernant l'adressage physique de cet au moins un équipement esclave (20) par l'intermédiaire du réseau de transmission de données (30), **caractérisé en ce que** l'ordinateur principal (10), dans un mode de fonctionnement d'installation séquentiel pour des équipements esclaves (20) auxquels aucune adresse matérielle (HA) n'est attribuée à l'adresse logique (LA), demande de la part d'un utilisateur, une information d'attribution entre adresse logique (LA) et adresse matérielle (HA) et après réussite de l'attribution, stocke celle-ci dans une unité de stockage (13), et **en ce que** la demande de l'information d'attribution a lieu du fait que l'ordinateur principal (10) met en route une unité de signal (21) dans l'équipement esclave (20) à attribuer en utilisant l'adresse matérielle (HA) et fournit une liste d'adresses logiques sur un écran (11) à partir de laquelle l'utilisateur sélectionne sur l'écran (11) l'adresse logique (LA) appartenant à l'équipement esclave (20) ayant une unité de signal (21) mise en route.

2. Procédé selon la revendication 1, **caractérisé en ce que** l'ordinateur principal (10) signale l'attribution réussie de l'adresse logique (LA) à l'adresse matérielle (HA) en activant l'unité de signal (21) dans l'équipement esclave (20) sélectionné.

3. Procédé selon une des revendications précédentes, **caractérisé en ce que** l'adresse matérielle (HA) comporte une adresse de bus (ADR) indiquant la position de cet au moins un équipement esclave (20) dans le réseau de transmission de données (30).

4. Procédé selon la revendication 3, **caractérisé en ce que** l'adresse matérielle (HA) contient de plus un marqueur d'identification (ID) identifiant cet au moins un équipement esclave (20) de manière univoque.

5. Procédé selon une des revendications précédentes, **caractérisé en ce que** lors de la mise en route de la commande numérique, l'ordinateur principal (10) vérifie si une adresse matérielle (HA) est attribuée à chaque adresse logique (LA) et dans le cas d'une information d'attribution manquante, il commute dans le mode de fonctionnement d'installation.

6. Procédé selon une des revendications précédentes, **caractérisé en ce que** l'information d'attribution est stockée sous la forme d'un fichier de paramètres (PM).

7. Procédé selon une des revendications précédentes, **caractérisé en ce que** l'unité de stockage (13) sur laquelle est stockée l'information d'attribution est un stockage non volatil.

8. Commande numérique pour machines-outils ou machines de production constituée d'un ordinateur principal (10) et d'au moins un équipement esclave (20), reliés entre eux par l'intermédiaire d'un réseau de transmission de données (30), **caractérisée en ce que** l'ordinateur principal (10) et au moins un équipement esclave (20) sont installés pour l'exécution d'un procédé selon une des revendications précédentes.

9. Commande numérique selon la revendication 8, **caractérisée en ce que** le réseau de transmission de données (30) est constitué de liaisons point à point sérielles.
